# EUROPÄISCHE PATENTSCHRIFT

(11) **EP 1 748 215 B1**
(45) Veröffentlichungstag und Bekanntmachung des Hinweises auf die Patenterteilung: **23.04.2008**
(21) Anmeldenummer: 06023885.4
(22) Anmeldetag: 10.02.2006
(51) Int. Cl.: F16D 69/04

(54) **Bremsbelagträgerplatte**
Brake pad backing plate
Plateau de frein pour plaquette de frein

(30) Priorität: 11.02.2005 DE 102005006569; 27.07.2005 US 161240
(43) Veröffentlichungstag der Anmeldung: 31.01.2007
(62) Teilanmeldung aus: 06002718.2
(73) Patentinhaber: AML Lanxide Europe GmbH, 53340 Meckenheim (DE)
(72) Erfinder: Jung, Friedrich H., Dipl.-Ing., 65620 Waldbrunn-Ellar (DE)
(74) Vertreter: Müller, Eckhard

(56) Entgegenhaltungen:
- EP-A- 1 484 524
- WO-A-02/090792
- US-A- 4 005 991
- US-A- 5 376 410

## Beschreibung

Die Erfindung betrifft eine Bremsbelagträgerplatte zum Halten eines Reibbelages, insbesondere für den Einbau in eine Fahrzeug-Bremsanlage, mit auf der Belagseite in Reihen angeordneten Haltesstrukturen für den Reibbelag, wobei jede Haltestruktur eine Vertiefung und einen Vorsprung aufweist, der Vorsprung unter Bildung der Vertiefung durch Materialverdrängung in der Oberfläche erzeugt ist und zum Eingriff mit dem Reibbelag gelangt, und Vorsprung und Vertiefung in Richtung der Reihen hintereinander liegen, wobei die Reihen im Wesentlichen quer zur Längsachse der Bremsbelagträgerplatte verlaufen.

### Stand der Technik

Eine Bremsbelagträgerplatte der hier angesprochenen Art ist aus der EP 1 484 524 A1 bekannt. Die Bremsbelagträgerplatte weist in Reihen angeordnete und jeweils einen Vorsprung und eine zugehörige Vertiefung aufweisende Haltestrukturen auf, wobei die Reihen im Wesentlichen quer zur Längsachse der Bremsbelagträgerplatte verlaufen. Darüber hinaus sind die Reihen parallel zueinander auf der Bremsbelagträgerplatte angeordnet. Aufgrund der hierdurch erzielten Anordnung der Haltestrukturen ist jedoch der Kontur des von der Bremsbelagträgerplatte gehaltenen Reibbelages nur bedingt entsprochen.

### Aufgabenstellung

Der Erfindung liegt die Aufgabe zugrunde, eine Bremsbelagträgerplatte der eingangs genannten Art weiterzuentwickeln, deren Haltestrukturen besser als bisher an die Kontur des Reibbelages angepasst sind.

### Erfindung und vorteilhafte Wirkungen

Zur Lösung dieser Aufgabe ist es nach der Erfindung vorgesehen, dass die Reihen fächerförmig in ihrer Längserstreckung angeordnet sind. Hierdurch wird insbesondere der Kontur des Reibbelages bei den üblichen Scheibenbremsen Rechnung getragen.

Dabei bietet es sich an, dass die Reihen - bezogen auf die Einbaulage der Bremsbelagträgerplatte - in radialer Richtung nach außen divergieren. Hierdurch ergeben sich günstige Haltebedingungen für den Reibbelag, insbesondere bei den üblichen Scheibenbremsen, da die Haltestrukturen dadurch beim Bremsen weniger belastet sind und damit die Gefahr eines Abscherens des Reibbelages verringert ist.

Nach einer Weiterbildung der Erfindung ist es vorgesehen, dass die Position des Vorsprungs und der Vertiefung der Haltestrukturen zwischen benachbarten Reihen alterniert. Sofern die freien Enden der Vorsprünge in eine Richtung weisen, d.h. in Fertigungsrichtung der Haltestrukturen der betreffenden Reihe zur folgenden oder vorhergehenden Haltestruktur, weisen die Vorsprünge benachbarter Reihen in diesem Fall aufeinander zu. Auch hierdurch kann einem sogenannten Edge-Lifting wirksam entgegengewirkt werden, da an beiden Kantenbereichen des Reibbelages, in welche sich die Reihen mit ihren beiden Enden erstrecken, neben einer Vertiefung stets ein Vorsprung der benachbarten Reihe angeordnet ist.

Unter Edge-Lifting wird das Ablösen des Reibbelages an seiner äußeren Kontur beziehungsweise im Bereich seiner Kanten von der Bremsbelagträgerplatte verstanden, welches durch Eindringen von Feuchtigkeit, Wasser, Salzwasser und dergleichen in diesen Bereich und gegebenenfalls dadurch hervorgerufenes Rosten der Bremsbelagträgerplatte ausgelöst wird. Bei der aus der EP 1 484 524 A1 bekannten Bremsbelagträgerplatte weisen mehrere nebeneinanderliegende Reihen der seitlich angeordneten Reihen im Randbereich des Reibbelages Vertiefungen auf, welche noch vor dem ersten Vorsprung in der Reihe angeordnet sind. Damit kann es gerade in den kritischen Randbereichen des Bremsbelages zu einer Ansammlung von Feuchtigkeit in den Vertiefungen kommen, so dass dadurch das Edge-Lifting begünstigt ist. Dem wird durch die alternierende Position von Vorsprung und Vertiefung der Haltestrukturen zwischen benachbarten Reihen entgegengewirkt.

Eine vorteilhafte Weiterbildung der Erfindung besteht darin, dass bei gegenläufig angeordneten Haltestrukturen benachbarter Reihen, in Fertigungsrichtung der Haltestrukturen gesehen, der Anfang jeder Reihe gegenüber dem Ende der jeweils benachbarten Reihe in Richtung zur Mitte der Bremsbelagträgerplatte verschoben ist. Auf diese Weise ist es möglich, dass - in Fertigungsrichtung gesehen - im Kantenbereich des Reibbelages keine Vertiefung liegt, sondern lediglich Vorsprünge.

Es bietet sich dabei an, wenn die Haltestrukturen benachbarter Reihen versetzt zueinander angeordnet sind, wobei vorzugsweise im Bereich der Vertiefungen einer Reihe jeweils ein Vorsprung der jeweils benachbarten Reihe zu Liegen kommt. Dadurch ist vermieden, dass die Vertiefungen benachbarter Reihen unmittelbar nebeneinander zu liegen kommen und damit ein durchgehender Kriechweg für Feuchtigkeit, Schmutzwasser, Salzwasser und dergleichen vorhanden ist.

Eine alternative Ausgestaltung der Erfindung sieht vor, dass die Bremsbelagträgerplatte wenigstens zwei Bereiche mit jeweils aufeinanderzu laufenden, fächerförmig ausgerichteten Reihen von Haltestrukturen aufweist, wobei die Haltestrukturen des einen Bereichs gegenläufig zu den Haltestrukturen des anderen Bereiches ausgerichtet sind. Hierdurch ist ein die Bremsbelagträgerplatte schonenden Herausarbeiten der Haltestrukturen möglich, da die zur Herstellung der Haltestrukturen auf den einen Bereich wirkenden Kräfte und die auf den anderen Bereich wirkenden Kräfte sich weitgehend gegenseitig aufheben. Das ist insbesondere dann der Fall, wenn die zwei Bereich spiegelsymmetrisch zur Mittelquerachse und/oder zur Mittellängsachse der Bremsbelagträgerplatte angeordnet sind.

Es bietet sich an, wenn die Reihen der beiden Bereiche in entgegen gesetzte Richtung divergieren. Hierdurch lassen sich insbesondere große Bremsbelagträgerplatten in herstellungstechnisch einfacher Weise mit den Haltestrukturen versehen, indem in zwei aufeinanderfolgenden Arbeitsgängen zuerst die Haltestrukturen des einen Bereiches und dann nach Umspannungen der Bremsbelagträgerplatte in der die Vorsprünge erzeugenden Vorrichtung die Reihen des zweiten Bereiches erzeugt werden können.

In die gleiche Richtung zielt die alternative Maßnahme, dass die Reihen der beiden Bereiche in Richtung zur Mitte der Bremsbelagträgerplatte divergieren.

Nach einer weiteren alternativen Maßnahme kann es auch vorgesehen sein, dass die Reihen der beiden Bereiche in die gleiche Richtung divergieren.

In diesem Fall bietet es sich an, wenn die Reihen ein im Wesentlichen gleiches Konvergenzzentrum aufweisen. Dies ist insbesondere dann von Vorteil, wenn die Reihen der beiden Bereiche gleichzeitig in einem Arbeitstakt hergestellt werden, da dadurch das zum Erzeugen dieser Reihen erforderliche Werkzeug einfach hergestellt werden kann.

Dabei ist es von Vorteil, wenn die beiden Bereiche sich im Randbereich ihrer einander zugewandten Seiten derart überschneiden, dass zwischen den Enden benachbarter Reihen des einen Bereiches die Enden der Reihen des anderen Bereiches liegen. Dadurch ist gerade in dem beim Bremsen besonders stark belasteten Bereich der Bremsbelagträgerplatte eine hohe Haltewirkung des Reibbelages auf der Bremsbelagträgerplatte aufgrund der großen Anzahl an Vorsprüngen gewährleistet.

Die Herstellung des Werkzeuges zur Bearbeitung der Bremsbelagträgerplatte gestaltet sich besonders einfach, wenn die aneinander angrenzenden Haltestrukturen benachbarter Reihen jeweils auf einem Radius liegen.

Von Vorteil ist es ferner, wenn die Haltestrukturen zumindest im Randbereich des Reibbelages angeordnet sind. Zur Vermeidung des Edge-Liftings reicht es nämlich bereits aus, wenn die Haltestrukturen im Randbereich des Reibbelages vorliegen. Es ist dazu an sich nicht mehr erforderlich, auch die innere Fläche der Bremsbelagträgerplatte vollständig mit Haltestrukturen zu versehen. Jedoch ist durch eine ganzflächige Anordnung von Haltestrukturen auf zusätzlich eine höhere Aufnahme von Bremskräften erzielt.

Von Vorteil ist es, wenn die Vorsprünge eine Höhe h von 1,40 mm bis 1,8 mm, vorzugsweise 1,6 mm, aufweisen. In diesem Bereich kann eine besonders gute Verbindung des Reibbelages auf der Bremsbelagträgerplatte erreicht und einem Edge-Lifting entgegengewirkt werden.

In die gleiche Richtung geht die Maßnahme, dass die Vorsprünge in einem Winkel α von etwa 80° bis 84° zur Oberfläche der Bremsbelagträgerplatte, vorzugsweise in Richtung zur jeweils zugeordneten Vertiefung, ausgerichtet sind.

Es bietet sich an, wenn die Bremsbelagträgerplatte gekrümmt oder im Wesentlichen flach ausgebildet ist. Dadurch kann die Bremsbelagträgerplatte nicht nur in einer Scheibenbremsanlage, sondern auch in einer Trommelbremsanlage verwendet werden.

### Ausführungsbeispiele

### Ausführungsbeispiele

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine mögliche Ausführungsform einer erfindungsgemäßen Bremsbelagträgerplatte zum Halten eines Reibbelages in perspektivischer Ansicht,
- Figur 2: die Bremsbelagträgerplatte gemäß Figur 1 als Draufsicht,
- Figur 3: die Bremsbelagträgerplatte gemäß Figur 1 als Seitenansicht,
- Figur 4: die Bremsbelagträgerplatte gemäß Figur 1 als Schnittdarstellung entlang der Schnittlinie A-A gemäß Figur 2,
- Figur 5: die Haltestruktur der Bremsbelagträgerplatte gemäß Figur 1 als Darstellung des Details B gemäß Figur 4,
- Figur 6: ein weiteres Ausführungsbeispiel einer erfindungsgemäßen Bremsbelagträgerplatte als Draufsicht,
- Figur 7: eine Weiterbildung der Bremsbelagträgerplatte gemäß Figur 6 als Draufsicht,
- Figur 8: ein wiederum anderes Ausführungsbeispiel einer erfindungsgemäßen Bremsbelagträgerplatte als Draufsicht,
- Figur 9: ein weiteres Ausführungsbeispiel einer erfindungsgemäßen Bremsbelagträgerplatte als Draufsicht und
- Figur 10: eine weitere alternative Ausführungsform einer erfindungsgemäßen Bremsbelagträgerplatte als Draufsicht.

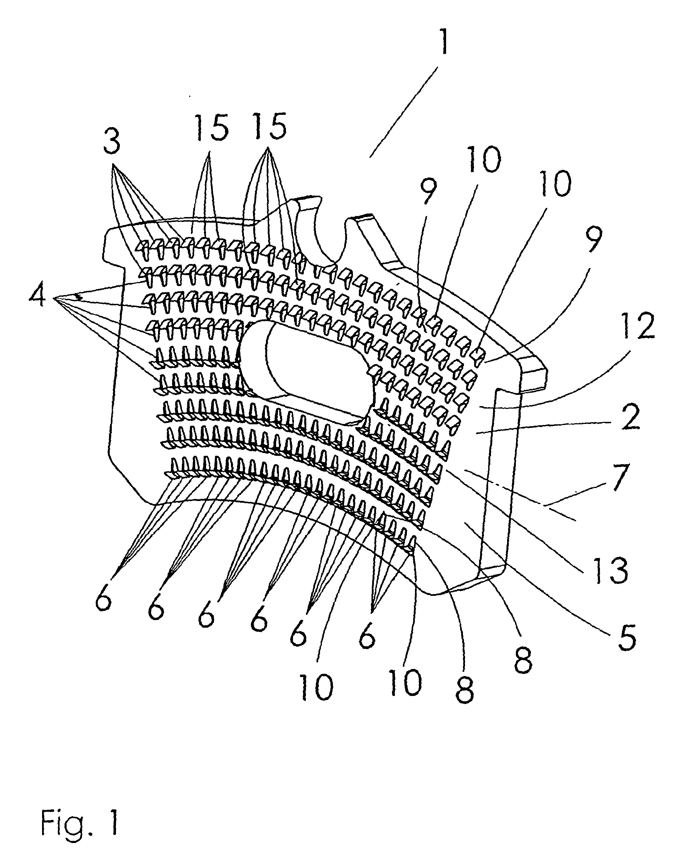

In den Figuren 1 bis 4 ist eine Bremsbelagträgerplatte 1 zum Halten eines Reibbelages dargestellt, wie sie beispielsweise in einer Fahrzeug-Bremsanlage verwendet wird. Eine solche Bremsanlage kann beispielsweise eine Scheibenbremse sein. Grundsätzlich kann die Bremsbelagträgerplatte auch in einer Trommelbremse oder einer anderen Art von Bremsanlage eingesetzt werden.

Die Bremsbelagträgerplatte 1 weist auf der Belagseite 2 in Reihen 6 angeordnete Halterstrukturen 15 für den (nicht dargestellten) Reibbelag auf. Jede Haltestruktur 15 enthält einen Vorsprung 3 und eine Vertiefung 4, wobei der Vorsprung 3 unter Bildung der Vertiefung 4 durch Materialverdrängung in der Oberfläche 5 erzeugt ist und in Eingriff mit dem (nicht dargestellten) Reibbelag gelangt.

Die Reihen 6 verlaufen im Wesentlichen quer zur Längsachse 7 der Bremsbelagträgerplatte 1 und sind fächerförmig angeordnet, und zwar in der Weise, dass die Reihen 6 - bezogen auf die Einbaulage der Bremsbelagträgerplatte 1 - in der Bremsanlage nach radial außen divergieren. Ferner liegen die aneinander angrenzenden Haltestrukturen 15 benachbarter Reihen 6 jeweils auf einem Radius 11.

Bei dem vorliegenden Ausführungsbeispiel sind die Haltestrukturen 15 in den Reihen 6 derart angeordnet, dass am Anfang 8 und am Ende 9 jeder Reihe 6 sich ein Vorsprung 10 befindet. Die Reihen 6 weisen ferner zwei Abschnitte 12, 13 auf, in denen die Positionen von Vorsprung 3 und Vertiefung 4 der Haltestrukturen 15 gegenläufig ist oder alterniert. Weiterhin sind die einzelnen Reihen 6 mit Haltestrukturen 15 so angeordnet, dass sie an den Rand des (nicht dargestellten) Reibbelages angrenzen.

Nach einem hier nicht dargestellten Ausführungsbeispiel ist es selbstverständlich auch möglich, dass die Haltestrukturen 15 lediglich im Randbereich des Reibbelages angeordnet sind.

Bei dem Ausführungsbeispiel gemäß Figur 1 sind die Vorsprünge als Krimpen 3 ausgebildet, wobei die freien Enden der Krimpen zurückgebogen, bspw. auf die jeweils zugehörige Vertiefung 4 gerichtet sind.

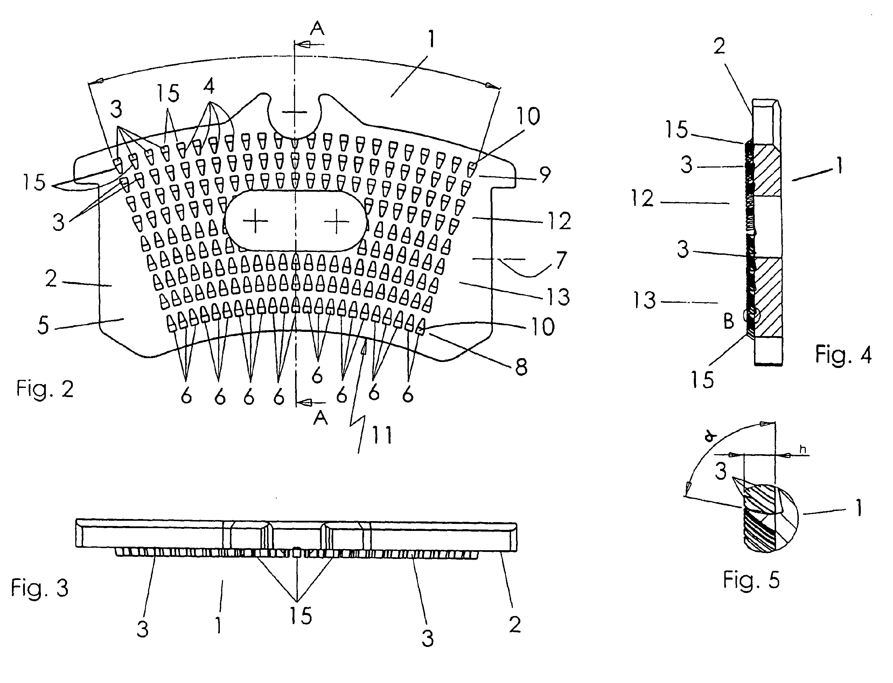

Wie aus Figur 5 ersichtlich, können die Krimpen beziehungsweise Vorsprünge 3 eine Höhe h von etwa 1,6 mm aufweisen und in einem Winkel α von etwa 80° bis 84° zur Oberfläche 5 der Bremsbelagträgerplatte 1 in Richtung zur jeweils zugeordneten Vertiefung 4 stehen. Selbstverständlich können die Vorsprünge 3, auch andere Höhen aufweisen und in anderer Weise ausgebildet sein, beispielsweise in Form von Stiften, Zähnen, Spänen oder dergleichen.

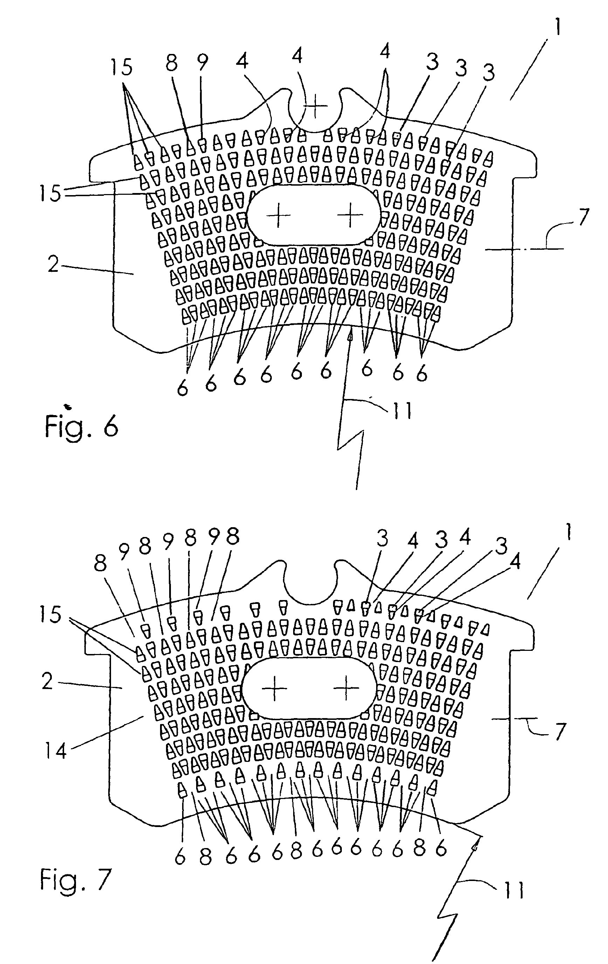

In Figur 6 ist ein weiteres Ausführungsbeispiel der Bremsbelagträgerplatte 1 dargestellt. Es unterscheidet sich von dem Ausführungsbeispiel gemäß Figur 1 unter anderem dadurch, dass die Position des Vorsprungs 3 und der Vertiefung 4 der Haltestrukturen 15 zwischen benachbarten Reihen 6 alterniert. Dadurch grenzen die herstellungsbedingt mit einer Vertiefung 4 beginnenden Reihen 6 im Randbereich des Reibbelages jeweils an einen Vorsprung 3 am - in Fertigungsrichtung der Haltestrukturen gesehenen - Ende der jeweils benachbarten Reihe an. Am Anfang und Ende der Reihe 6 alternieren daher Vertiefungen 4 und Vorsprünge 3.

Eine Weiterbildung des Ausführungsbeispiels der Belagträgerplatte 1 gemäß Figur 6 zeigt Figur 7. Die dort dargestellte Bremsbelagträgerplatte 1 unterscheidet sich unter anderem von dem Ausführungsbeispiel gemäß Figur 6 darin, dass in Fertigungsrichtung der Haltestrukturen 15 gesehen, der Anfang 8 jeder Reihe 6 gegenüber dem Ende 9 der jeweils benachbarten Reihen 6 in Richtung zur Mitte 14 der Bremsblagträgerplatte 1 verschoben ist.

Nach einem weiteren, hier nicht dargestellten Ausführungsbeispiel ist es darüber hinaus möglich, dass die Haltestrukturen 15 benachbarter Reihen 6 versetzt zueinander angeordnet sind, so dass also im Bereich der Vertiefung 4 einer Reihe ein Vorsprung 3 der benachbarten Reihe 6 zu liegen kommt.

Ferner kann es nach einer hier nicht dargestellten Ausführungsform der Bremsbelagträgerplatte 1 mit fächerförmiger Ausrichtung der Reihen vorgesehen sein, dass der Winkel zwischen benachbarten Reihen zwischen 0° und etwa 15° liegt.

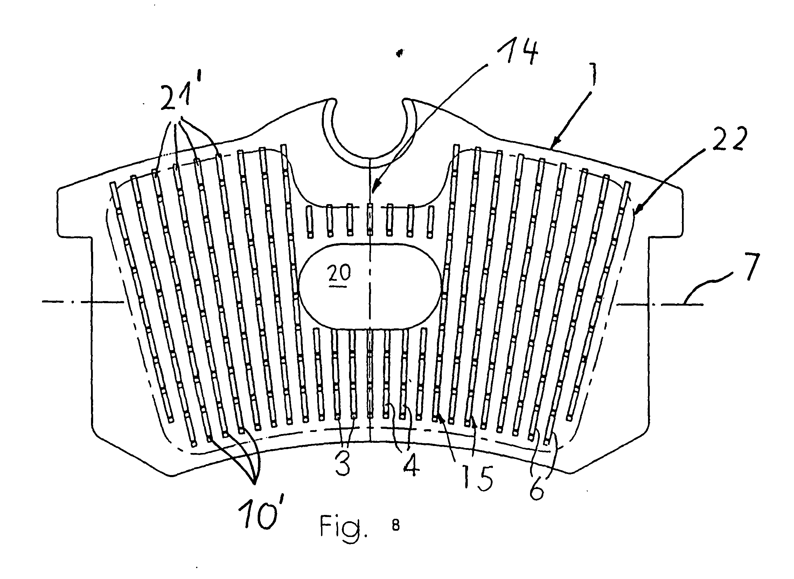

In Ergänzung zu den Ausführungsformen der Bremsbelagträgerplatte 1 gemäß den Figuren 1 bis 7 zeigt Figur 8 ein weiteres Ausführungsbeispiel der Bremsbelagträgerplatte 1. Auch dort sind die Reihen 6 mit den Haltestrukturen 15 im wesentlichen quer zur Längsachse 7 der Bremsbelagträgerplatte 1 angeordnet, wobei die Reihen 6 vorzugsweise in ihrer Längsrichtung fächerförmig ausgerichtet sind. Dabei divergieren die Reihen 6 bezogen auf die Einbaulage der Bremsbelagträgerplatte 1 in radialer Richtung nach außen. Bei dieser Ausführungsform liegen lediglich bei den in radialer Richtung nach innen weisenden Enden jeder Reihe 6 ein Vorsprung 10' vor. Dagegen befindet sich an den in radialer Richtung nach außen weisenden Enden jeder Reihe 6 jeweils eine Vertiefung 21'. Die Position von Vorsprung 3 und Vertiefung 4 der Haltestrukturen 15 zwischen benachbarten Reihen 6 ist insofern bei dieser Ausführungsform nicht alternierend, sondern gleichgerichtet. Im Bereich der Mitte 14 weist die Bremsbelagträgerplatte 1 eine ovale Öffnung 20 auf.

Die strichpunktierte Linie 22 zeigt die Kontur des Reibbelages, bis zu dessen Randbereich sich Haltestrukturen 15 erstrecken.

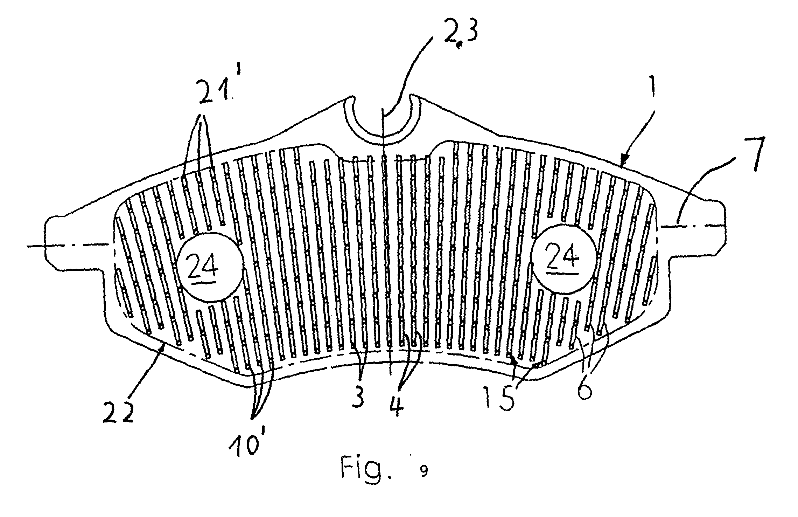

Figur 9 zeigt ein weiteres Ausführungsbeispiel der Bremsbelagträgerplatte 1, welches sich von der Ausführungsform gemäß Figur 8 unter anderem dadurch unterscheidet, dass dort zwei im wesentlichen kreisrunde Öffnungen 24 vorgesehen sind, welche spiegelsymmetrisch bezüglich der Querachse 23 der Bremsbelagträgerplatte 1 und in Abstand zueinander angeordnet sind. Die Haltestrukturen 15 sind auf der Bremsbelagträgerplatte 1 derart angeordnet, dass ein Reibbelag mit anderer Kontur 22 als bei der Ausführungsform gemäß Figur 8 eingesetzt werden kann.

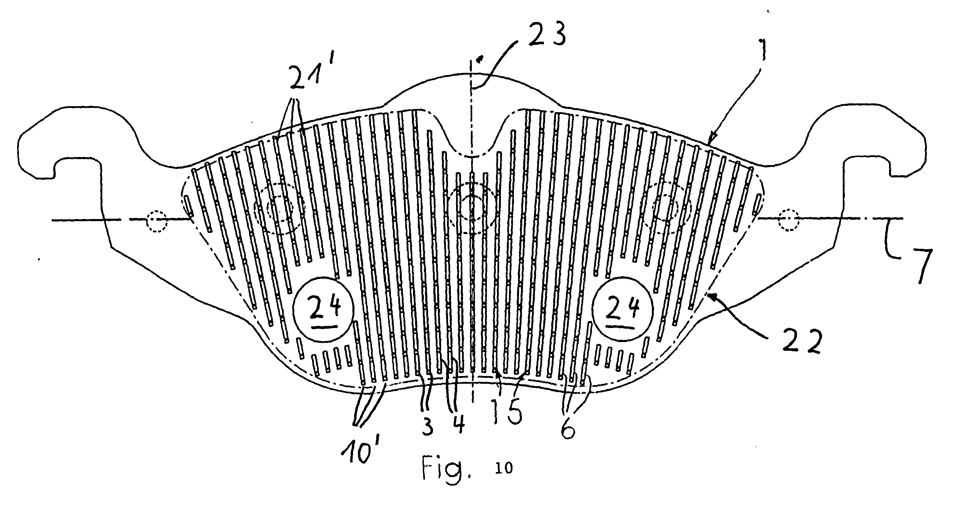

Figur 10 zeigt eine weitere Ausführungsform der Bremsbelagträgerplatte 1. Sie stellt quasi eine Weiterbildung der Ausführungsformen gemäß der Figuren 8 und 9 dar, wobei die Haltestrukturen 15 im Randbereich derart gestaltet sind, dass wiederum eine andere Reibbelag-Kontur mit der Bremsbelagträgerplatte 1 eingesetzt werden kann. Auch zeigt diese Ausführungsform der Bremsbelagträgerplatte 1 eine alternative äußere Kontur zum Einbau in anderen Fahrzeugen.

### Bezugszeichenliste

- 1: Bremsbelagträgerplatte
- 2: Belagseite
- 3: Vorsprung, Krimpe
- 4: Vertiefung
- 5: Oberfläche
- 6: Reihen
- 7: Längsachse
- 8: Anfang
- 9: Ende
- 10: Vorsprung
- 10': Vorsprung
- 11: Radius
- 12: Abschnitt
- 13: Abschnitt
- 14: Mitte
- 15: Haltestrukturen
- 20: Öffnung
- 21': Vertiefung
- 22: Kontur des Reibbelages
- 23: Querachse
- 24: Öffnung

- h: Höhe
- α: Winkel

## Patentansprüche

1. Bremsbelagträgerplatte (1) zum Halten eines Reibbelages, insbesondere für den Einbau in eine Fahrzeug-Bremsanlage, mit auf der Belagseite (2) in Reihen (6) angeordneten Haltestrukturen (15) für den Reibbelag, wobei jede Haltestruktur (15) eine Vertiefung (4) und einen Vorsprung (3) aufweist, der unter Bildung der Vertiefung (4) durch Materialverdrängung in der Oberfläche (5) erzeugt ist und in Eingriff mit dem Reibbelag gelangt, und Vorsprung (3) und Vertiefung (4) in Richtung der Reihen (6) hintereinander liegen, wobei die Reihen (6) im Wesentlichen quer zur Längsachse (7) der Bremsbelagträgerplatte (1) verlaufen, **dadurch gekennzeichnet, dass** die Reihen (6) in ihrer Längserstreckung fächerförmig ausgerichtet sind.

2. Bremsbelagträgerplatte nach Anspruch 1, **dadurch gekennzeichnet, dass** bei im Wesentlichen in Querrichtung der Bremsbelagträgerplatte (1) verlaufenden Reihen (6) diese, bezogen auf die Einbaulage der Bremsbelagträgerplatte (1), in radialer Richtung nach außen divergieren.

3. Bremsbelagträgerplatte nach Anspruch 1 oder 2, **dadurch gekennzeichnet, dass** die Position von Vorsprung (3) und Vertiefung (4) der Haltestrukturen (15) zwischen benachbarten Reihen (6) alterniert.

4. Bremsbelagträgerplatte nach Anspruch 3, **dadurch gekennzeichnet, dass** bei gegenläufig angeordneten Haltestrukturen (15) benachbarter Reihen (6) in Fertigungsrichtung der Haltestrukturen (15) gesehen der Anfang (8) jeder Reihe (6) gegenüber dem Ende (9) der jeweils benachbarten Reihe (6) in Richtung zur Mitte (14) der Bremsbelagträgerplatte (1) versetzt ist.

5. Bremsbelagträgerplatte nach einem der vorhergehenden Ansprüche, **dadurch gekennzeichnet, dass** die Haltestrukturen (15) benachbarter Reihen (6) versetzt zueinander angeordnet sind, wobei vorzugsweise im Bereich der Vertiefungen (4) einer Reihe (6) jeweils ein Vorsprung (3) der jeweils benachbarten Reihe zu liegen kommt.

6. Bremsbelagträgerplatte nach Anspruch 1, **gekennzeichnet durch** wenigstens zwei Bereiche mit jeweils aufeinander zu laufenden, fächerförmig ausgerichteten Reihen (6) von Haltestrukturen (15), wobei die Haltestrukturen (15) des einen Bereichs gegenläufig zu den Haltestrukturen (15) des anderen Bereichs ausgerichtet sind.

7. Bremsbelagträgerplatte nach Anspruch 6, **dadurch gekennzeichnet, dass** die Reihen (6) der beiden Bereiche in entgegengesetzter oder gleicher Richtung divergieren.

8. Bremsbelagträgerplatte nach Anspruch 6 oder 7, **dadurch gekennzeichnet, dass** bei in die gleiche Richtung divergierenden Reihen (6) der zwei Bereiche die Reihen (6) ein im Wesentlichen gleiches Konvergenzzentrum aufweisen.

9. Bremsbelagträgerplatte nach Anspruch 6, **dadurch gekennzeichnet, dass** die Reihen (6) der beiden Bereiche in Richtung zur Mitte (14) der Bremsbelagträgerplatte (1) divergieren.

10. Bremsbelagträgerlatte nach einem der Ansprüche 6 bis 9, **dadurch gekennzeichnet, dass** die beiden Bereiche sich im Randbereich ihrer einander zugewandten Seiten derart überschneiden, dass zwischen den Enden benachbarter Reihen (6) des einen Bereiches die Enden der Reihen (6) des anderen Bereiches liegen.

11. Bremsbelagträgerplatte nach einem der Ansprüche 6 bis 10, **dadurch gekennzeichnet, dass** die wenigstens zwei Bereiche spiegelsymmetrisch zur Mittelquerachse und/oder zur Mittellängsachse der Bremsbelagträgerplatte angeordnet sind.

12. Bremsbelagträgerplatte nach einem der vorhergehenden Ansprüche, **dadurch gekennzeichnet, dass** die aneinander angrenzenden Haltestrukturen (15) benachbarter Reihen (6) jeweils auf einem Radius (11) liegen.

13. Bremsbelagträgerplatte nach einem der vorhergehenden Ansprüche, **dadurch gekennzeichnet, dass** die Haltestrukturen (15) zumindest im Randbereich des Reibbelages angeordnet sind und vorzugsweise an den Rand des Reibbelages angrenzen.

14. Bremsbelagträgerplatte nach einem der vorhergehenden Ansprüche, **dadurch gekennzeichnet, dass** die Vorsprünge (3) eine Höhe h von 1,40 mm bis 1,80 mm, vorzugsweise 1,60 mm, aufweisen.

15. Bremsbelagträgerplatte nach einem der vorhergehenden Ansprüche, **dadurch gekennzeichnet, dass** die Vorsprünge (3) in einem Winkel α von etwa 80° bis 84° zur Oberfläche (5) der Bremsbelagträgerplatte (1), vorzugsweise in Richtung zur jeweils zugeordneten Vertiefung (4), ausgerichtet sind.

16. Bremsbelagträgerplatte nach einem der vorhergehenden Ansprüche, **dadurch gekennzeichnet, dass** sie gekrümmt oder im Wesentlichen flach ausgebildet ist.

## Claims

1. Brake lining carrier plate (1) for holding a friction lining, particularly for installation in a vehicle brake system, with retaining structures (15), which are arranged in rows (6) on the lining side (2), for the friction lining, wherein each retaining structure (15) comprises a depression (4) and a projection (3), which with formation of the depression (4) is produced by material displacement in the surface (5) and comes into engagement with the friction lining, and projection (3) and depression (4) lie one behind the other in the direction of the rows (6), wherein the rows (6) extend substantially transversely to the direction of the longitudinal axis (7) of the brake lining carrier plate (1), **characterised in that** the rows (6) are oriented in fan shape in their longitudinal direction.

2. Brake lining carrier plate according to claim 1, **characterised in that** in the case of rows (6) extending substantially in transverse direction of the brake lining carrier plate (1) these diverge outwardly in radial direction with respect to the installed position of the brake lining carrier plate (1).

3. Brake lining carrier plate according to claim 1 or 2, **characterised in that** the position of projection (3) and depression (4) of the retaining structures (15) alternates between adjacent rows (6).

4. Brake lining carrier plate according to claim 3, **characterised in that** in the case of retaining structures (15), which are arranged in opposite sense, of adjacent rows (6) as seen in the production direction of the retaining structures (15) the start (8) of each row (6) is offset relative to the end (9) of the respectively adjacent row (6) in direction towards the centre (14) of the brake lining carrier plate (1).

5. Brake lining carrier plate according to one of the preceding claims, **characterised in that** the retaining structures (15) of adjacent rows (6) are arranged offset relative to one another, wherein preferably coming into to lie in the region of the depressions (4) of a row (6) is in each instance a projection (3) of the respectively adjacent row.

6. Brake lining carrier plate according to claim 1, **characterised by** at least two regions with rows (6), which respectively run towards one another and which are oriented in fan shape, of retaining structures (15), wherein the retaining structures (15) of one region are oriented in opposite sense to the retaining structures (15) of the other region.

7. Brake lining carrier plate according to claim 6, **characterised in that** the rows (6) of the two regions diverge in opposite direction or the same direction.

8. Brake lining carrier plate according to claim 6 or 7, **characterised in that** in the case of rows (6), which diverge in the same direction, of the two regions the rows (6) have substantially the same centre of convergency.

9. Brake lining carrier plate according to claim 6, **characterised in that** the rows (6) of the two regions diverge in direction towards the centre (14) of the brake lining carrier plate (1).

10. Brake lining carrier plate according one of claims 6 to 9, **characterised in that** the two regions intersect in the edge region of their mutually facing sides in such a manner that lying between the ends of adjacent rows (6) of one region are the ends of the rows (6) of the other region.

11. Brake lining carrier plate according to one of claims 6 to 10, **characterised in that** at least two regions are arranged with mirror symmetry relative to the centre transverse axis and/or the centre longitudinal axis of the brake lining carrier plate.

12. Brake lining carrier plate according to one of the preceding claims, **characterised in that** the mutually adjoining retaining structures (15) of adjacent rows (6) respectively lie on one radius (11).

13. Brake lining carrier plate according to one of the preceding claims, **characterised in that** the retaining structures (15) are arranged at least in the edge region of the brake lining and preferably adjoin at the edge of the brake lining.

14. Brake lining carrier plate according to one of the preceding claims, **characterised in that** the projections (3) have a height h of 1.40 millimetres to 1.80 millimetres, preferably 1.60 millimetres.

15. Brake lining carrier plate according to one of the preceding claims, **characterised in that** the projections (3) are oriented at an angle α of approximately 80° to 84° relative to the surface (5) of the brake lining carrier plate (1), preferably in direction towards the respectively associated depression (4).

16. Brake lining carrier plate according to one of the preceding claims, **characterised in that** it is formed to be curved or substantially flat.

## Revendications

1. Plateau support pour plaquette de frein (1) destiné à la fixation d'une garniture de friction, en particulier destiné à être monté dans une installation de freinage d'un véhicule, comportant des structures de fixation (15) pour la garniture de friction, disposées en rangées (6) sur le côté (2) recevant la plaquette, chaque structure de fixation (15) comportant un creux (4) et une saillie (3), qui est générée sous l'effet de la formation du creux (4) par un refoulement de matière dans la surface (5) et entre en prise avec la garniture de friction, et la saillie (3) et le creux (4) sont disposés l'un derrière l'autre dans la direction des rangées (6), lesdites rangées (6) étant orientées sensiblement transversalement à l'axe longitudinal (7) du plateau support pour plaquette de frein (1), **caractérisé en ce que** les rangées (6) sont disposées en éventail dans le sens de leur longueur.

2. Plateau support pour plaquette de frein selon la revendication 1, **caractérisé en ce que**, en présence de rangées (6) orientées sensiblement dans le sens transversal du plateau support pour plaquette de frein (1), lesdites rangées divergent vers l'extérieur dans le sens radial par rapport à la position de montage du plateau support pour plaquette de frein (1).

3. Plateau support pour plaquette de frein selon la revendication 1 ou 2, **caractérisé en ce que** la position de la saillie (3) et du creux (4) des structures de fixation (15) est alternée entre des rangées (6) adjacentes.

4. Plateau support pour plaquette de frein selon la revendication 3, **caractérisé en ce que**, en présence de structures de fixation (15) disposées en sens opposé dans des rangées (6) adjacentes, le début (8) de chaque rangée (6), par référence au sens de fabrication des structures de fixation (15), est décalé vers le milieu (14) du plateau support pour plaquette de frein (1) par rapport à la fin (9) de la rangée (6) adjacente respective.

5. Plateau support pour plaquette de frein selon l'une quelconque des revendications précédentes, **caractérisé en ce que** les structures de fixation (15) de rangées (6) adjacentes sont décalées les unes par rapport aux autres, sachant que de préférence dans la zone des creux (4) d'une rangée (6) vient se positionner respectivement une saillie (3) de la rangée adjacente respective.

6. Plateau support pour plaquette de frein selon la revendication 1, **caractérisé par** au moins deux zones ayant chacune des rangées (6), disposées en éventail et convergeant les unes vers les autres, de structures de fixation (15), les structures de fixation (15) de l'une des zones étant orientées dans le sens opposé des structures de fixation (15) de l'autre zone.

7. Plateau support pour plaquette de frein selon la revendication 6, **caractérisé en ce que** les rangées (6) des deux zones divergent dans la direction opposée ou dans la même direction.

8. Plateau support pour plaquette de frein selon la revendication 6 ou 7, **caractérisé en ce que**, en présence de rangées (6) des deux zones, divergeant dans la même direction, les rangées (6) ont sensiblement le même centre de convergence.

9. Plateau support pour plaquette de frein selon la revendication 6, **caractérisé en ce que** les rangées (6) des deux zones divergent vers le centre (14) du plateau support pour plaquette de frein (1).

10. Plateau support pour plaquette de frein selon l'une quelconque des revendications 6 à 9, **caractérisé en ce que** les deux zones se coupent dans la zone périphérique de leurs côtés orientés l'un vers l'autre, de telle sorte que les extrémités des rangées (6) de l'une des zones se situent entre les extrémités de rangées (6) adjacentes de l'autre zone.

11. Plateau support pour plaquette de frein selon l'une quelconque des revendications 6 à 10, **caractérisé en ce que** lesdites au moins deux zones sont disposées symétriquement par rapport à l'axe transversal médian et/ou par rapport à l'axe longitudinal médian du plateau support pour plaquette de frein.

12. Plateau support pour plaquette de frein selon l'une quelconque des revendications précédentes, **caractérisé en ce que** les structures de fixation (15) contiguës les unes aux autres dans des rangées (6) adjacentes se situent respectivement sur un rayon (11).

13. Plateau support pour plaquette de frein selon l'une quelconque des revendications précédentes, **caractérisé en ce que** les structures de fixation (15) sont disposées au moins dans la zone périphérique de la garniture de friction et sont de préférence adjacentes au bord de la garniture de friction.

14. Plateau support pour plaquette de frein selon l'une quelconque des revendications précédentes, **caractérisé en ce que** les saillies (3) ont une hauteur h de 1,40 mm à 1,80 mm, de préférence 1,60 mm.

15. Plateau support pour plaquette de frein selon l'une quelconque des revendications précédentes, **caractérisé en ce que** les saillies (3) sont orientées selon un angle α de 80° à 84° environ par rapport à la surface (5) du plateau support pour plaquette de frein (1), de préférence en direction du creux (4) respectivement associé.

16. Plateau support pour plaquette de frein selon l'une quelconque des revendications précédentes, **caractérisé en ce qu'**il est réalisé sous forme courbe ou sensiblement plane.
